**Europäisches Patentamt**

**European Patent Office**

**Office européen des brevets**

(19)

(11) Veröffentlichungsnummer : **0 569 353 B1**

(12) **EUROPÄISCHE PATENTSCHRIFT**

(45) Veröffentlichungstag der Patentschrift :
**06.12.95 Patentblatt 95/49**

(51) Int. Cl.[6] : **G02B 6/12, H01S 3/06, H01S 3/108, G01B 9/02**

(21) Anmeldenummer : **91903756.4**

(22) Anmeldetag : **01.02.91**

(86) Internationale Anmeldenummer :
**PCT/EP91/00185**

(87) Internationale Veröffentlichungsnummer :
**WO 92/14176 20.08.92 Gazette 92/22**

(54) **LITHIUMNIOBAT-WELLENLEITERSTRUKTUREN MIT SELTENE-ERDE-DOTIERUNG.**

(43) Veröffentlichungstag der Anmeldung :
**18.11.93 Patentblatt 93/46**

(45) Bekanntmachung des Hinweises auf die
Patenterteilung :
**06.12.95 Patentblatt 95/49**

(84) Benannte Vertragsstaaten :
**AT BE CH DE DK ES FR GB GR IT LI LU NL SE**

(56) Entgegenhaltungen :
**WO-A-86/06847
Optics Letters, Band 15, Nr. 12, 15. Juni 1990,
Optical Society of America,(New York, US), E.
Lallier et al.: "Nd:MgO:LiNbO3 waveguide laser and amplifier", Seiten 682-684
Electronics Letters, Band 24, Nr. 15, 21. Juli
1988, (Stevenage, Herts, GB), M.J. Li et al.:
"Optical waveguide fabrication in neody-
mium-doped lithium niobate", Seiten 914-915
Electronics Letters, Band 24, Nr. 1, 7. Januar
1988, (Stevenage, Herts, GB), A.C.G. Nutt et
al.: "Simple control of Ti-diffused LiNbO3 waveguide profile and propagation characteristics", Seiten 56-58
Electronics Letters, Band 22, Nr. 17, 14. August 1986, (Stevenage, Herts, GB),K. Komatsu
et al.: "Titanium magnesium double diffusion
method for efficient fibre-LiNbO3 waveguide
coupling", Seiten 881-882
Journal of Lightwave Technology, Band LT-5,
Nr. 7, Juli 1987, IEEE, (New York,US), H. Toda
et al.: "Optical integrated circuit for a fiber
laser doppler velocimeter", Seiten 901-905**

(56) Entgegenhaltungen :
**Proceedings of the SPIE - The International
Society for Optical Engineering,Band 1362, PT.
1, (US), R. Brinkmann et al.: "Absorption, fluorescence and stimulated emission in Ti-
diffused Er:LiNbO3 waveguides", Seiten
377-382
Proceedings of the SPIE - The International
Society for Optical Engineering,Band 1128,
1989, (US), S. Iraj Najafi et al.: "Ion-exchanged
rare-earth doped waveguides", Seiten
142-144**

(73) Patentinhaber : **PIRELLI CAVI S.p.A.
Viale Sarca, 222
I-20126 Milano (IT)**

(72) Erfinder : **Sohler, Wolfgang, Prof. Dr.
Wewelsburger Weg 1
D-33100 Paderborn (DE)**
Erfinder : **Suche, Hubertus, Dr.
Pohlweg 41c
D-33098 Paderborn (DE)**

(74) Vertreter : **Marchi, Massimo et al
c/o Marchi & Mittler s.r.l.
Viale Lombardia 20
I-20131 Milano (IT)**

EP 0 569 353 B1

## Beschreibung

Die Erfindung betrifft eine Wellenleiterstruktur mit einer diffundierten Seltene-Erde-Dotierung in einem Lichtleiterkanal, der in einer Lithiumniobat-Kristalloberfläche eingebracht ist.

Aus R. Brinkmann et al, "Annealed Erbium-implanted singlemode LiNbO3 waveguides", 1990, OSA Techn. Digest Series, Vol.5, post deadline paper, PD1, ist ein erbiumdotierter Lithiumniobat-Lichtwellenleiter bekannt, der mittels einer Erbium-Ionenimplantation und anschließender Temperung hergestellt ist. Dabei wurde die oberflächennahe Erbiumdotierung planar eingebracht. Die Kristallstruktur wird oberflächennah durch die Erbiumionenstrahlen zerstört, und diese Zerstörung muß in einem gesonderten Verfahrensschritt wieder ausgeheilt werden, damit der Kristall wieder optisch brauchbar wird. Solange die Ausheilung durch eine Wärmebehandlung stattfindet, wandern die eingelagerten Erbiumatome wegen der in dem zerstörten Bereich gegebenen höheren Beweglichkeit bevorzugt in Richtung auf die Oberfläche des Kristalls und weniger in die Tiefe, in der der Lichtleiterkanal die wirksame Erbiumdotierung benötigt. Außerdem ist eine enge seitliche Dotierungsbegrenzung auf den schmalen Lichtleiterkanal nicht vorgesehen, so daß Erbium-Fluorenszenzverluste durch eine Reabsorption in den lateralen Ausläufern des Wellenleiterkanals auftreten, da der $^4I_{13/2}$ - - $^4I_{15/2}$ Erbium-Fluoreszenzübergang zu einem 3-Niveau-System gehört und zum Grundzustand führt.

Aus Proceeding of the SPIE, Bd. 1362, PT1, Seiten 377-382 sind Wellenleiterstrukturen mit einem mit Erbium dotierten Bereich und einem Lichtleiterkanal bekannt, die durch in einem Lithiumniobat (LiNbO$_3$) -kristall angeordnetes, eindiffundiertes Titan gebildet sind.

Eine örtliche Erbiumdotierung in Lithiumniobat wird ausgeführt entweder durch Erbium-Ionenstrahl-Implantation in einem Lithiumniobat-Plättchen und anschließendes thermisches Glühen oder durch Diffusion einer Erbiumschicht (photolithographisch strukturiert), die durch Electronenstrahlverdampfung im Vakuum aufgebracht wird. Der örtlichen Erbiumdotierung folgt die Titandiffusion im Lithiumniobat-Plättchen, wodurch der Lichtleiterkanal gebildet wird.

Beide Dotiertechniken haben den Nachteil, daß die Konzentration der Erbiumdotierung in der Nähe der Oberfläche des Plättchens hoch und in Tiefen niedrig ist, wo, im Gegensatz, der Wellenleiter eine hohe Erbiumdotierung benötigt, um effektiv zu sein. Tatsächlich ist es vorteilhaft, wenn die maximale Dotierung annähernd mit der Schwerpunkt der Lichtintensitätverteilung im Lichtleiterkanal übereinstimmt.

Darüber hinaus führen beide Dotiertechniken nicht zu einer schmalen seitlichen Dotiergrenze zum schmalen Lichtleiterkanal, so daß Erbium-Fluoreszenzverluste eintreten.

Aus Optics Letters, Bd. 15, Nr. 12, Seiten 682-684 sind Nd:MgO:LiNbO$_3$-Wellenleiterlaser und Verstärker bekannt.

In diesem Artikel wird aber kein Hinweis auf eine lokale Neodym-Dotierung gegeben. Eine solche Dotierung ist für Nd:LiNbO$_3$ auch gar nicht notwendig, da die angeführte Emission bei 1084 nm nicht durch Reabsorption in ungepumpten Bereichen verloren gehen kann (4-Niveau-System).

Die Nd-MgO-dotierten Wellenleiter arbeiten mit Licht mit einer Wellenlänge von 1084 nm. Sie sind daher nicht geeignet in optischen Nachrichtensystemen mit Licht mit einer Wellenlänge von etwa 1500 nm entsprechend dem sogenannten dritten Kommunikationsfenster optischer Faserkabel. Tatsächlich ist eine stimulierte Emission bei dieser Wellenlänge typisch für Erbium, so daß bei dieser Wellenlänge integrierte Bauelemente erforderlich sind, die durch mit Erbium dotiertem Lithiumniobat ausgeführte Wellenleiter gebildet sind.

Für die monolithische Integration von Erbium-dotierten aktiven (bei Wellenlängen um 1550 nm emittierenden) und passiven Bauelementen (Modulatoren, Kopplern, etc.) auf einem gemeinsamen Lithiumniobatkristallsubstrat ist jedoch eine lokale Dotierung entscheidend, da die Erbiumemission um 1550 nm durch Reabsorption in ungepumpten Bereichen verloren gehen kann (3-Niveau-System).

Es ist Aufgabe der Erfindung, Seltene-Erde-dotierte Wellenleiterstrukturen verbesserter optischer Qualität, nämlich geringerer Streuverluste und höherer Verstärkungskoeffizienten sowie mit erhöhter Absorption einer Pumpstrahlung, zur Verwendung für integriert optische Verstärker und Laser, hergestellt mit einem zur Implantationstechnik vereinfachten Herstellungsverfahren, zu offenbaren.

Die Lösung ist dadurch gegeben, daß die Seltene-Erde-Dotierung in einem wirksamen Seltene-Erde-Dotierungsbereich zu dem Lichtleiterkanal annähernd koaxial angeordnet ist, dieser Dotierungsbereich unmittelbar von der Kristalloberfläche aus eindiffundiert ist und eine seitlich begrenzte Ausdehnung hat.

Vorteilhafte Ausgestaltungen sind in den Unteransprüchen angegeben.

Besonders vorteilhaft ist es, wenn die Seltene-Erde-Dotierung seitlich oder tiefenmäßig oder insbesondere allseitig eine geringere wirksame Ausdehnung als der Lichtleiterkanal hat. Dabei ist es besonders vorteilhaft, wenn das Dotierungsmaximum unterhalb der Oberfläche des Kristalls liegt und vorzugsweise sich mit dem Schwerpunkt der Lichtverteilung im Lichtleiterkanal weitgehend deckt.

Als besonders vorteilhaft hat sich die Seltene-Erde Erbium erwiesen, da ihr kleiner Ionendurchmesser eine relativ gute Beweglichkeit bei dem Diffusionsprozeß ermöglicht. Andere Seltene-Erden, z.B. Neodym, erfor-

2

dern längere Diffusionsvorgänge oder wesentlich höhere Diffusionstemperaturen.

Die Wellenleiterstrukturen lassen sich überlappend zu der Erbiumdotierung mittels einer bekannten Titandiffusionsdotierung erzeugen. Da die Titandiffusionstemperatur und die Diffusionszeit des Titan die zur Bildung eines Wellenleiters ausreichen auch die Seltene-Erde tiefer in den Kristall eindringen zu lassen, wird zweckmäßig dieser Tempervorgang einkalkuliert, wenn die endgültige Diffusiontiefe der Seltenen-Erde bestimmt wird. Die schnellere Diffusion des Titan erbringt dabei die gewünschte größere Ausdehnung des Lichtleiterkanals als des Seltene-Erde-Dotierungsbereichs.

Der Lichtleiterkanal läßt sich auch den Seltene-Erde-Dotierungsbereich umschließend als ein Protonenaustauschwellenleiter erzeugen, wobei in bekannter Weise Litiumionen durch Wasserstoffionen ersetzt werden.

Der Wellenleiter mit der Seltene-Erde-Dotierung läßt sich vorteilhaft für einen optischen Wanderwellenverstärker verwenden, in dem diesem eine Eingangslichtwelle und eine Pumpwelle zugeführt werden. Vorteilhaft wird der Lichtleiterkanal rückwärtig mit einem wellenlängenselektiven Spiegel abgeschlossen. Durch diesen wird die Pumpwelle in den aktiven Bereich reflektiert und dadurch doppelt zur Verstärkung der Eingangslichtwelle genutzt. Die verstärkte Lichtwelle tritt durch den Spiegel hindurch, da er für deren Frequenz nur eine geringe Reflexion aufweist.

Ein besonders kurzer und wirksamer Wanderwellenverstärker ist dadurch herzustellen, daß die Pumpwelle über eine integriert optische Weiche unmittelbar in den optisch aktiven Seltene-Erde-Dotierungsbereich des Lichtleiterkanals eingekoppelt wird.

Besonders vorteilhaft lassen sich mit dem Lichtleiterkanal verschiedene andere Bauelemente, z.B. Wellenlängenfilter und/oder Polarisationsfilter sowie Modulatoren integrieren, wobei diese Filter entweder getrennt von dem optisch aktiven Seltene-Erde-Dotierungsbereich angeordnet sind oder diesen wirksam überlagernd mit diesem integriert sind.

Auf dem Lichtleiterkanal läßt sich ein gesteuert abstimmbares integriert optisches Wellenlängenfilter anordnen. Auf diese Weise läßt sich ein Wanderwellenverstärker derart steuern, daß eine wellenlängenselektive Verstärkung der Eingangslichtwelle erfolgt. Somit ist ein schmalbandiger durchstimmbarer optischer Verstärker gegeben.

Besonders vorteilhaft läßt sich ein Wanderwellenverstärker mit einem auf dem gleichen Kristall-Substrat angeordneten verlustbehafteten integriert optischen Bauelement gemeinsam optisch gekoppelt anordnen, wobei der Wanderwellenverstärker derart ausgelegt und in seiner Verstärkung, z.B. durch eine dosierte Pumpwellenzuführung, derart zu steuern ist, daß er zusammen mit dem verlustbehafteten weiteren Bauelement eine verlustfreie Baugruppe bildet, die auch 0-dB-Baugruppe genannt wird.

Wird der Lichtleiterkanal mit der Seltene-Erde-Dotierung beidseitig mit einem Spiegel abgeschlossen, der ein dielektrischer, metallischer oder reliefgitterartiger Spiegel sein kann, so entsteht ein Laser. In diesen wird in bekannter Weise eine Pumpwelle eingespeist, und das erzeugte Licht wird durch einen der Spiegel in bekannter Weise emittiert.

Es ist vorteilhaft, einen solchen Laser unmittelbar auf dem gleichen Substrat zu erzeugen, auf dem mindestens ein weiteres optisches Bauelement gebildet ist, das entweder außerhalb des Laserresonators angeordnet und mit diesem optisch gekoppelt ist oder innerhalb des Laserresonators wirksam angeordnet ist. Ein solches optisches Bauelement kann sowohl vom Seltene-Erde-Dotierungsbereich getrennt angeordnet sein aber auch in vielen Fällen platzsparend und verlustarm mit diesem unmittelbar überlagert sein, so daß sich der aktive Bereich des Lasers und des optischen Bauelementes überdecken. Dabei läßt sich die Laseremission durch steuerbare Funktionselemente unmittelbar beeinflussen. Insbesondere lassen sich vorteilhaft steuerbare elektrooptische, akusto-optische oder nichtlinear-optische Wandler mit einem Laser integrieren, die die erzeugte Emission in ihrer Phase, Amplitude und/oder Frequenz zu steuern ermöglichen.

Beispielhaft läßt sich ein elektro-optischer Phasenmodulator mit dem aktiven Bereich des Lasers überlagern. Die elektrische Steuerung des Modulatorfeldes wird vorteilhaft phasensynchron mit der Differenzfrequenz benachbarter axialer Eigenmoden des Lasers vorgenommen, so daß durch eine Modenkopplung eine periodische Folge von Laser-Emissionsimpulsen entsteht.

Wird dem Laser ein steuerbarer akusto-optischer Modulator wirksam überlagert, so kann dieser derart gesteuert werden, daß er einen Modenkonverter bildet und dadurch entsprechend eine Güteschaltung des Laserresonators gesteuert bewirkt. Damit kann man kurze Laserimpulse gesteuert aussenden.

Vorteilhaft läßt sich mit einem Laser ein zweistufiger akusto-optischer Polarisationskonverter integrieren, der abschnittsweise mit zwischengeschalteten Polarisatoren versehen ist, die jeweils die eine oder andere Polarisation durchlassen und dadurch als Wellenlängenfilter wirken. Auf diese Weise tritt endseitig jeweils eine schmalbandige Emission auf, deren Frequenz kontinuierlich durch die Steuerung des elektro-akustischen Wandlers bestimmt werden kann. Somit hat man einen kontinuierlich steuerbaren Laser.

Als besonders vorteilhafte Anwendung sowohl des integrierten Lasers als eines entdämpfenden Wanderwellenverstärkers ergibt sich durch deren Kombination mit einem Heterodyninterferometer aus auf dem gleichen Substrat integrierten optischen Bauelementen. Durch die Verstärkung des wenigen vom Prüfobjekt reflektierten Lichtes mittels des Wanderwellenverstärkers ergibt sich eine hohe Empfindlichkeit der Meßvorrichtung. Die Integration des Lasers auf dem gleichen Substrat vermeidet Streuverluste am Kristalleingang.

Das Herstellverfahren der Seltene-Erde-Dotierungsbereiche ist relativ einfach, da keine Hochenergiestrahlen benötigt werden und der Kristall nicht zerstört und anschließend wieder geheilt werden muß. Zur Erzeugung der schmalen Dotierungsstreifen in dem Kristall lassen sich bekannte Techniken einsetzen. Insbesondere ist die Photolithographie, z.B. in Verbindung mit der Lift-off-Technik, geeignet, einen schmalen Streifen eines gesputterten oder hochvakuumbedampften Seltene-Erde-Metalles oder -Metalloxids zu erzeugen. Dieser Streifen läßt sich dann beispielsweise in einer Argon-Sauerstoffatmosphäre in den Kristall eindiffundieren.

Ein anderes Verfahren ist es, eine flächige Seltene-Erde-Dotierung des Lithiumniobatkristalles vorzunehmen, wonach mittels einer Photoresisttechnik ein schmaler Photoresiststreifen darauf erzeugt wird, worauf eine Ätzung der unbeschichteten Oberfläche erfolgt, so daß der überschüssige Dotierungsbereich seitlich abgetragen wird und ein erhabener dotierter Kanal auf dem Kristall verbleibt. Besonders vorteilhaft läßt sich der schmale Seltene-Erde-Dotierungsbereich in seiner Wirksamkeit und Verlustarmut verbessern, wenn eine oberflächennahe Ausdiffusion in ein Sol-Gel vorgenommen wird, so daß das Konzentrationsmaximum in einer bestimmten Tiefe entsteht. Dadurch werden die Randverluste und Oberflächenverluste vermindert. Die bei der Ausdiffusion auftretende Tiefendiffusion wird zweckmäßig bei der Gesamtplanung der verschiedenen Temperungsschritte, nämlich der anfänglichen Eindiffusion, der anschließender Ausdiffusion und ggf. der Lichtkanaldiffusion mit berücksichtigt, damit die Gesamttiefe der Seltene-Erde-Diffusion geringer als die Tiefe der Titandiffusion bleibt.

Wird der Lichtleiterkanal durch einen Protonenaustausch erzeugt, so geschieht dies in bekannter Weise durch eine metallische Maske, die über den Seltene-Erde-Dotierungsbereich orientiert ist. Ein solcher Lichtleiterkanal eignet sich besonders für solche Bauelemente, bei denen eine Wellenausbreitung nur in einer Polarisation erwünscht ist.

Die Erfindung wird anhand der Figuren 1 bis 8 dargestellt.

Fig. 1     zeigt einen vergrößerten Querschnitt durch einen Lichtleiterkanal;

Fig. 2     zeigt einen Wanderwellenverstärker;

Fig. 3     zeigt einen Laser mit einem elektro-optischen Modulator;

Fig. 4     zeigt einen Laser mit einem akusto-optischen Wandler;

Fig. 5     zeigt ein Heterodyninterferometer;

Fig. 6     zeigt einen ersten Herstellprozeß schematisch;

Fig. 7     zeigt einen zweiten Herstellprozeß ausschnittweise schematisch;

Fig. 8     zeigt Dotierungsprofile nach verschiedenen Prozeßschritten.

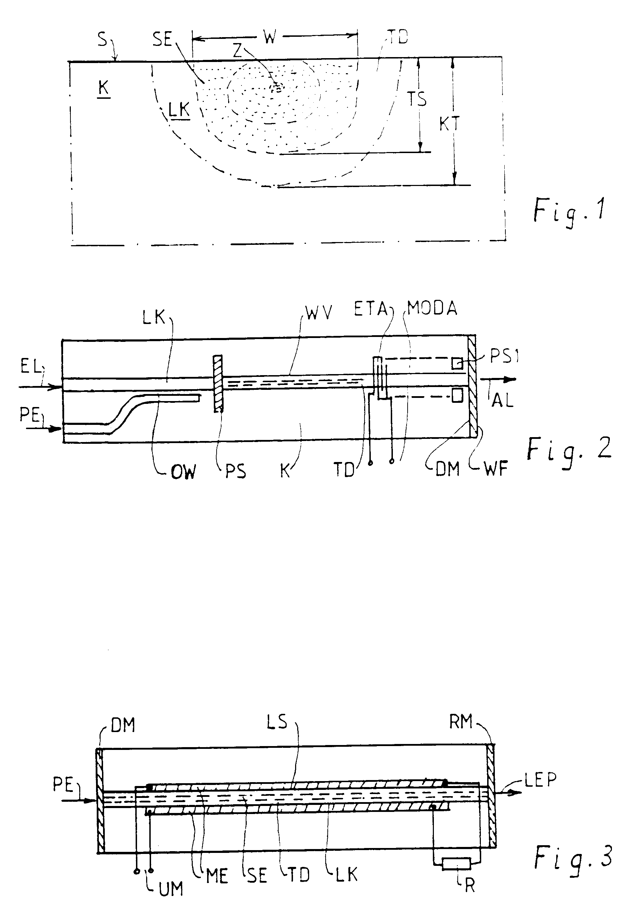

Figur 1 zeigt einen Querschnitt eines Kristalles, von dessen Oberfläche aus eine Seltene-Erde-Dotierung in einen Dotierungsbereich (SE) eingebracht ist, der von einem Lichtleiterkanal (LK) umschlossen ist, der durch eine Titandiffusion (TD) oder einen Protonenaustausch gebildet ist. Der Seltene-Erde-Dotierungsbereich (SE) hat eine geringere Weite (W) als der Lichtleiterkanal sowie eine geringere Dotierungtiefe (TS) als eine Kanaltiefe (KT) des Lichtleiterkanals (LK) ist. Das Konzentrationsmaximum der Seltene-Erde-Dotierung (SE) liegt in einem Dotierungszentrum (Z) unterhalb der Kristalloberfläche (S).

Figur 2 zeigt ein integriert optisches Bauelement das aus einem Lichtleiterkanal (LK) besteht der abschnittweise mit einer Seltene-Erde-Dotierung (SE) versehen ist. An diesen dotierten Abschnitt schließt sich ein Wellenleiterabschnitt mit einem elektro-akustischer Wandler (ETA) und einem überlagerten akustischen Wellenleiter an, der einen akustooptischen Modulator bildet. Dieser ist einerseits mit einem ersten Polarisator (PS1) und mit einem dielektrischen Spiegel (DM) versehen, der auf eine Pumpwellenlänge reflektiv ausgestaltet ist. Andererseits des Seltene-Erde-Dotierungsbereichs (SE) ist ein zweiter Polarisator (PS) angeordnet, vor dem ein Lichtwelleneingang (EL) sowie eine optische Weiche (OW), die zu einem Pumpwelleneingang (PE) führt, angeordnet sind. Diese gesamte Anordnung bildet einen Wanderwellenverstärker (WV), der durch den elektroakustischen Wandler (ETA) mittels dessen elektrischer Steuersignale wellenlängenselektiv steuerbar ist, so daß jeweils eine bestimmte Wellenlänge als verstärkte Ausgangswelle (AL) den rückwärtigen Spiegel (DM) verläßt. Der Lichtleiterkanal (LK) ist zweckmäßig durch eine Titandiffusion (TD) eingebracht. Der Polarisator (PS1) ist ein oberflächlich aufgebrachter TM-Pass-Polarisator.

Figur 3 zeigt einen Laser (LS), dessen Lichtleiterkanal (LK) mit einer Seltene-Erde-Dotierung (SE) versehen ist, und der beidseitig mit Spiegeln (DM, RM) abgeschlossen ist. Der eine Spiegel wird außenseitig mit der Pumpwelle (PE) beaufschlagt, und der andere Spiegel läßt die Laseremission (LEP) austreten. Über dem Lichtleiterkanal (LK) der durch eine Titandiffusion (TD) oder einen Protonenaustausch in den Kristall eingebracht ist, ist ein elektro-optischer Modulator (MODE) angeordnet, indem beidseitig des Lichtleiterkanals (LK)

EP 0 569 353 B1

nach Art einer elektrischen Wellenleitung Modulatorelektroden (ME) angeordnet sind. Diese sind einerseits mit einer Modulatorspannung (UM) beaufschlagt und andererseits mit einem Wellenwiderstand (R) abgeschlossen. Eine geeignete Modulation gestattet es, die Phase des Laserfeldes synchron mit einer Differenzfrequenz axialer Eigenmode des Lasers zu steuern. Hierdurch läßt sich eine periodische Folge von Laseremissionsimpulsen (LEP) erzeugen.

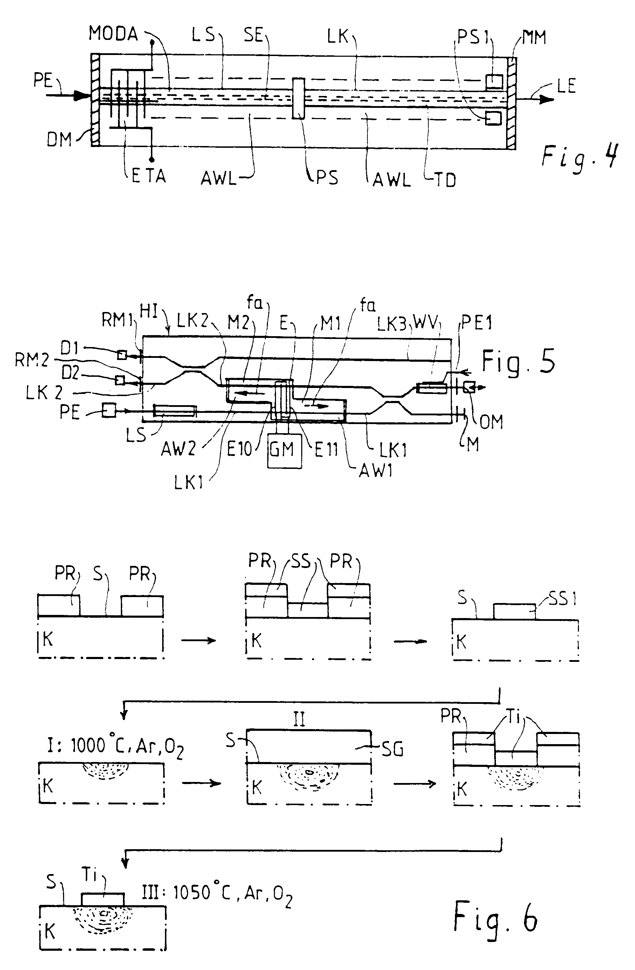

Figur 4 zeigt einen weiteren Laser (LS), dessen Lichtleiterkanal (LK) mittels einer Titandiffusion erzeugt ist, und der mit einem Seltene-Erde-Dotierungsbereich (SE) versehen ist.

Endseitig ist der Laser (LS) mit Spiegeln (DM, MM) abgeschlossen, von denen der eine vorzugsweise ein dielektrischer Spiegel (DM) ist und der andere ein metallischer Spiegel (MM) oder auch ein dielektrischer Spiegel ist. Der Lichtleiterkanal (LK) ist von einem zweistufigen Polarisationswandler überlagert, der durch einen elektro-akustischen Wandler (ETA) an der Seite des Pumpwelleneingangs (PE) zusammen mit einem akustischen Wellenleiter (AWL) gebildet wird. Dadurch wird ein akustisch-optischer Modulator (MODA) gebildet, der die Polarisation steuerbar wellenlängenselektiv zuerst in die TE-Mode dann in die TM-Mode dreht. Diese beiden Moden werden jeweils selektiv durch einen entsprechenden Polarisator (PS, PS1) am Ende der beiden Abschnitte ausgefiltert. Endseitig verläßt auf diese Weise die Laseremission (LE) den Spiegel (MM) abhängig von der Modulationssteuerung. Dadurch läßt sich mit dem Modenkonverter jeweils gesteuert die passende Wellenlänge des Filters vorgeben, so daß die Emission des Lasers kontinuierlich steuerbar und frequenzmäßig eingeengt wird. Ein einstufiges passives Wellenlängenfilter mit einem akusto-optischen Modulator ist in: J.Frangen et.al., Electronic Letters 1989, Vol. 25, No. 23, p. 1583 - 1584, beschrieben.

Figur 5 zeigt ein intergriert optisches Heterodyninterferometer (HI). Auf dem Kristall (K) sind drei Lichtleiterkanäle (LK1, - LK3) angeordnet, die miteinander durch selektive Modenkoppler verbunden sind. Die Vorrichtung wird von einer Pumpwelle (PE) gespeist, die den Laser (LS) beaufschlagt, der mit einer Seltene-Erde-Dotierung versehen ist und dessen emittiertes Licht das Interferometer versorgt. Auf dem Kristall sind zwei akustische Wellenleiter (AW1, AW2) angeordnet, die über einen elektro-akustischen Wandler (E) gespeist werden, dessen Elektroden (E10, E11) von einem Modulationsgenerator (GM) gespeist werden. Die Wellenleiter (AW1, AW2) bilden zusammen mit den Lichtleiterkanälen (LK1, LK2) Modulatoren (M1, M2), die einen Teil der Lichtwellen um die akustische Frequenz (fa) in ihrer Frequenz verschieben. Der erste Wellenleiterkanal (LK1) ist durch einen Spiegel (M) abgeschlossen, und der zweite Wellenleiterkanal (LK2) ist durch einen Objektreflektor (OM) abgeschlossen, der die Lichtwelle mit der Meßgröße moduliert. Die reflektierte modulierte Welle wird in einem Wanderwellenverstärker (WV) so hoch verstärkt, daß die objektseitigen Verluste kompensiert werden. Dieser Wanderwellenverstärker (WV) ist, wie beschrieben, mit einem Seltene-Erde dotierten Bereich versehen, in den Pumplicht (PE1) eingespeist wird. Endseitig sind die beiden Lichtleiterkanäle (LK2, LK3) mit Detektoren (D1, D2) versehen, die die austretenden Lichtsignale in elektrische Signale verwandeln, welche einem Differenzanalysator in bekannter Weise zugeführt werden. Die Grundfunktion eines solchen Heterodyninterferometers sind in der EP 90 105 787 dargestellt.

Eine vorteilhafte Variante des Heterodyninterferometers ist nur mit der einen Pumplichtwelle (PE), die geeignet polarisiert ist, beaufschlagt, indem diese endseitig durch einen wellenlängenselektiven Spiegel (MR) hindurchgelassen wird, von wo sie über die Lichtleiterkanäle (LK1. LK2) zu dem Wanderwellenverstärker (WV) gelangt und diesen mit Pumpenergie versorgt. Der zweite Pumplichteingang entfällt dann. Die von dem Wanderwellenverstärker (WV) rücklaufende Pumplichtwelle wird an den Ausgängen vor den Detektoren (D1, D2) durch wellenlängenselektive Spiegel (RM1, RM2) zur weiteren Nutzung wieder in das System reflektiert und von den Detektoren ferngehalten.

Figur 6 zeigt schematisch den Herstellungsprozess in sieben Schritten. Im ersten Verfahrensschritt wird auf das Substrat ein Photoresist (PR) aufgebracht, der mit der bekannten Technik strukturiert wird, so daß ein photoresistfreier Kanal oberhalb des Seltene-Erde-Dotierungsbereiches entsteht. In einem zweiten Schritt wird die Seltene-Erde als Metallschicht oder Metalloxidschicht (SS) aufgesputtert oder im Hochvakuum aufgedampft, wonach der Photoresist (PR) mit der daraufliegenden Schicht (SS) mittels der sogenannten Lift-off-Technik abgelöst wird. Dadurch entsteht in diesem Schritt auf der Oberfläche (S) des Kristalles (K) ein Seltene-Erde-Streifen (SS1), der in dem nächsten Verfahrensschritt in den Kristall (K) eindiffundiert wird. Diese Diffusion wird durch eine erste Temperung (I) in einer Ar-O2-Atmphäre vorgenommen, wobei die Temperatur und Dauer derart gewählt sind, daß eine vorgegebene Diffusionstiefe erreicht wird, die kleiner als die Tiefe des später einzubringenden Lichtleiterkanals ist. Es hat sich gezeigt, daß bei einem Z-Schnitt eines Lithiumniobatkristalles in 100 Stunden bei 1050°C eine Diffusionstiefe von 5 µm errreicht wird und bei 1080°C eine Diffusionstiefe von etwa 7,2 µm erreicht wird. Die Diffusionstiefe ist durch die 1/e-Konzentration der Oberflächenkonzentration bestimmt.

In einem weiteren Verfahrensschritt wird ein Siliziumoxidgel, auch Sol-Gel (SG) genannt, auf die Kristalloberfläche (S) aufgebracht und dann eine zweite Temperung (II) durchgeführt, wodurch eine oberflächennahe Ausdiffusion der Dotierung in das Gel erfolgt, so daß ein Dotierungszentrum (Z) maximaler Konzentration unterhalb der Oberfläche (S) des Kristalles (K) entsteht. Der Seltene-Erde-Dotierungsbereich (SE) dringt dabei weiter in die Tiefe des Kristalls (K) ein. In einem weiteren Schritt wird über die Photomaskentechnik eine Titanschicht (Ti) auf den strukturierten Photoresist (PR) und die Oberfläche (S) des Kristalles (K) aufgebracht, wonach der Photoresist mit der Titanschicht abgehoben wird. Das auf der Oberfläche (S) verbleibende Titan (Ti) wird dann in einem dritten Temperungsschritt (III) in einer Argon-Sauerstoff-Atmosphäre in den Kristall (K) eindiffundiert. Der Titanstreifen (Ti) liegt anfangs oberhalb des Zentrums (Z) der Seltene-Erde-Dotierung, so daß sich anschließend der Lichtleiterkanal mit der vorherigen Dotierung achsparallel deckt, wie dies Fig.1 zeigt. Für die Titandotierung wird zweckmäßig von einer 95 nm dicken Schicht ausgegangen, welche bei 1050°C 10 Stunden eindiffundiert wird. Ein solcher Wellenleiter ist bevorzugt geeignet für eine Transmission von einer Wellenlänge von 1,53 μm. Er eignet sich für einen Monomode-Betrieb.

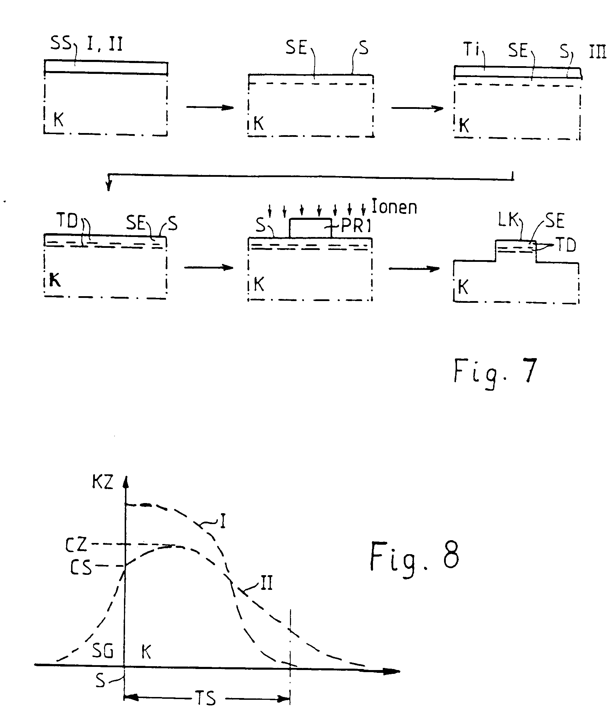

Figur 7 zeigt eine andere Weise der seitlichen Begrenzung des Lichtleiterkanales. Bei dem Verfahren wird zuerst die Seltene-Erde-Schicht (SS) auf dem Kristall (K) flächig aufgebracht und in der ersten Temperung (I) eindiffundiert. Anschließend wird flächig durch eine Titandiffusion oder ein Protonenaustauschverfahren ein planarer optischer Wellenleiter hergestellt.

Auf den flächigen Dotierungsbereich (SE) wird in einem weiteren Schritt ein Photoresist aufgebracht und nach dem bekannten Verfahren so strukturiert, daß über dem späteren Lichtleiterkanal ein Photoresiststreifen (PR1) verbleibt. In einem nächsten Schritt wird seitlich des Photresiststreifens durch eine Ionenätzung das überschüssige dotierte Material weggeätzt, wonach in einem nächsten Schritt der Photoresiststreifen abgelöst wird. Es verbleibt dann auf dem Kristall (K) ein schmaler Streifenwellenleiter, der mit der Seltenen-Erde dotiert ist.

Figur 8 zeigt einen Dotierungsquerschnitt wie er nach dem ersten Temperungsschritt (I) und dem Ausdiffusions-Temperschritt (II) ermittel wurde. Es zeigt sich, daß die Konzentration (KZ) anfangs nach Art einer Glockenkurvenhälfte verteilt ist und nach dem zweiten Temperschritt (II) in einer bestimmten Tiefe unterhalb der Oberfläche (S) eine Maximalkonzentration (ZS) aufweist, die höher als eine Oberflächenkonzentration (CS) ist. Die Dotierung reicht dabei bis in eine 1/e-Dotierungstiefe (TS), die wesentlich größer als nach dem ersten Temperschritt (I) ist.

Statt einer Titandiffusion kann in den Beispielen zu Fig. 1, 3, 6, 7 und 8 auch ein Protonenaustauschverfahren verwandt werden, wobei vorzugsweise die Kanalbreite durch eine metallische Maske, z.B. aus Cr/Ti oder Ta, definiert wird. Eine Benzoesäureschmelze wirkt dabei bei ca. 200°C über 2 Stunden auf den Kristall ein, und danach erfolgt eine Temperung bei 350°C über 3 bis 4 Stunden. Dieses Verfahren hat den Vorteil, daß eine wesentliche Nachdiffusion der Seltene Erde-Dotierung wegen der niedrigen Temperaturen nicht erfolgt.

Derart erzeugte Wellenleiter haben den Vorteil, daß sie frei von optisch induzierten Brechzahländerungen sind; sie führen die Wellen jedoch nur in der außerordentlichen Polarisation. Dieser Effekt wird ausgenutzt bei der Gütesteuerung eines Lasers oder gesteuerten Einfügedämpfung eines Wanderwellenverstarkers, indem durch die Steuerung der Polarisationsdrehung eine mehr oder weniger starke Dämpfung der aktiven Strecke erreicht wird.

Die titandiffundierten Wellenleiter haben den Vorteil, daß sie beide Polarisationen führen, weshalb sie besonders für polarisationskonvertierende Verfahren geeignet sind. Ein Nachteil der so erzeugten Lichtleiterkanäle besteht darin, daß sie nicht völlig frei von optisch induzierten Brechzahländerung sind. Was sich insbesondere für Wellenlängen unter einem Mikrometer auswirkt, die bei der Verwendung von Neodym als Seltene-Erde-Dotierungsmaterial auftreten. Da die Wellenlänge der Erbiumemission über einem Mikrometer liegt, ist diese Materialeigenschaft bei einer Erbium-Dotierung nicht gravierend.

Besonders vorteilhaft ist die Verwendung von Erbium als Dotierungsmaterial, da dessen Emissionswellenlänge von 1,53 μm zu dem sogenannten dritten Kommunikationsfenster der Glasfaserkabel paßt. Dadurch können die vorteilhaften integrierten optischen Bauelemente für die optische Kommunikation eingesetzt werden.

Die dargestellten einzelnen mit Seltener-Erde dotierten Komponenten lassen sich einzeln oder mehrfach und beliebig kombiniert auf einem Kristallsubstrat erzeugen. Dies führt zu einer Erhöhung der Integrationsdichte und einer Vereinfachung der Schaltungen, indem Zwischenverluste beim Übergang zwischen mehreren Substraten entfallen und beispielsweise eine Pumplichtquelle durch eine entsprechende Aufteilung der Wellen auf dem Substrat mehreren Lasern und/oder Wanderwellenverstärkern zuzuführen ist. Die photolithographische Technik läßt sich gleichzeitig, d.h. in einem Schritt, für die neuartigen Komponenten wie auch für andere vorbekannte integriert optische Bauelemente, die auf dem gleichen Substrat erzeugt werden und vorteilhaft mit den neuartigen Komponenten kombinierbar sind, anwenden, was die Fertigung vereinfacht und die Präzision der Gesamtschaltung erhöht.

**Patentansprüche**

1. Wellenleiterstruktur mit einem Bereich mit einer eindiffundierten Erbiumdotierung in einem Lichtleiterkanal (LK), der in einem Lithiumniobat-Kristall (K) angeordnet ist,
**dadurch gekennzeichnet** , daß der Bereich (SE) mit eindiffundierter Erbiumdotierung
   i) etwa koaxial mit dem Lichtleiterkanal (LK) angeordnet ist,
   ii) seitlich begrenzt ist,
   iii) eine Dotierungsbreite (W) und eine Dotierungstiefe (TS) aufweist, die kleiner als die Breite bzw. Tiefe des Lichtleiterkanals (LK) sind, und
   iv) eine geringere Erbiumkonzentration (CS) an der Oberfläche (S) des Kristalls als im Zentrum (Z) des Lichtleiterkanals (LZ) aufweist, so daß ein Dotierungszentrum (Z) maximaler Erbiumkonzentration unterhalb der Kristalloberfläche angeordnet ist.

2. Wellenleiterstruktur nach Anspruch 1, dadurch gekennzeichnet, daß der Lichtleiterkanal (LK) aus einem Kanal mit eindiffundierter Titandotierung besteht.

3. Wellenleiterstruktur nach Anspruch 1, dadurch gekennzeichnet, daß der Lichtleiterkanal (LK) aus einem Lithiumionen/Protonenausgetauschten Wellenleiter besteht, in dem Licht nur in einer Polarisation geführt wird.

4. Wellenleiterstruktur nach einem der Ansprüche 1 bis 3, dadurch gekennzeichnet, daß der Lichtleiterkanal (LK) einen optischen Wanderwellenverstärker (WV) mit dem optisch aktiven, mit Erbium dotierten Bereich (SE) bildet, der auf einer Seite mit einem Lichtwelleneingang (EL) und einem Pump-Lichtwelleneingang (PE) und auf einer anderen Seite mit einem Lichtwellenausgang (AL) versehen ist, wobei am Eingang eine zu verstärkende Eingangslichtwelle angelegt wird und am Ausgang eine verstärkte Ausgangslichtwelle austritt, wobei am Ausgang ein integrierter wellenlängenselektiver Spiegel (DM) angeordnet ist, der das Pumplicht in den optisch aktiven Bereich reflektiert, so daß die Pumpenwellenabsorption verbessert wird und so die Eingangslichtwelle eine verbesserte Verstärkung erfährt.

5. Wellenleiterstruktur nach Anspruch 4, dadurch gekennzeichnet, daß in dem Lithiumniobatkristall (K) ein wellenlängenselektiver integrierter optischer Koppler (OW) angeordnet und optisch mit dem Lichtleiterkanal (LK) verbunden ist, so daß die Pumplichtwelle direkt in den aktiven Bereich (SE) gekoppelt wird.

6. Wellenleiterstruktur nach den Ansprüchen 4 und 5, dadurch gekennzeichnet, daß im Lichtleiterkanal (LK) ein integriertes optisches Wellenlängenfilter (WF) mit gesteuerter Filtercharakteristik angeordnet ist, so daß eine gesteuerte wellenlängenselektive Verstärkung der Eingangslichtwelle (EL) erzeugt wird.

7. Wellenleiterstruktur nach den Ansprüchen 4 und 5, dadurch gekennzeichnet, daß der optische Wanderwellenverstärker (WV) mit einem auf dem Lithiumniobatkristallsubstrat (K) angeordneten, verlustbehafteten integrierten optischen Bauelement (VB) optisch in Reihe gekoppelt ist, wobei der optische Wanderwellenverstärker (WV) derart durch eine dosierte Pumplichtwelle gesteuert wird, daß der Verstärker mit dem verlustfreien optischen Bauelement (VB) als 0-dB-Anordnung arbeitet.

8. Wellenleiterstruktur nach den Ansprüchen 1 bis 3, dadurch gekennzeichnet, daß der Lichtleiterkanal (LK) einen Laser (LS) bildet, der aus dem optisch aktiven, mit Erbium dotierten und an beiden Enden mit Reflektoren (DM; RM; MM) versehenen Bereich (SE) besteht, wobei die Reflektoren aus einem dielektrischen Spiegel (DM), einem metallischen Spiegel (MM) bzw. einem Oberflächenreliefgitter (RM) bestehen, wobei ein Reflektor mit einem Pumpwelleneingang (PE) verbunden ist und der andere Reflektor die Laser-Emissionswelle (LEP) austreten läßt.

9. Wellenleiterstruktur nach Anspruch 8, dadurch gekennzeichnet, daß der Laser (LS) mit wenigstens einem anderen integrierten optischen Bauelement optisch gekoppelt ist, das das emittierte optische Feld bzw. resonante optische Feld im laser beeinflussen kann, wobei das andere Bauelement auf dem Lithiumniobatkristallsubstrat (K) außerhalb des Lasers (LS) bzw. räumlich überlagert mit diesem angeordnet ist.

10. Wellenleiterstruktur nach Anspruch 8, dadurch gekennzeichnet, daß der Laser (LS) mit wenigstens einem anderen integrierten optischen Bauelement gekoppelt ist, das auf dem Lithiumniobatkristallsubstrat (K) angeordnet ist und einen mit dem aktiven Bereich des Lasers sich überdeckenden aktiven Bereich aufweist.

11. Wellenleiterstruktur nach Anspruch 9 oder 10, dadurch gekennzeichnet, daß das andere Bauelement aus einem steuerbaren elektro-optischen, einem akusto-optischen oder einem nichtlinearen optischen Wandler besteht, durch den Phase, Amplitude und Frequenz der Laseremission (LEP, LE) steuerbar sind.

12. Wellenleiterstruktur nach Anspruch 11, dadurch gekennzeichnet, daß das andere optische Bauelement aus einem elektro-optischen Phasenmodulator besteht, der direkt überlagert ist dem aktiven Bereich des Lasers (LS) zum Modulieren der Wellenfeldphase des Lasers synchron mit der Differenzfrequenz benachbarter axialer, transversal einmodiger Eigenmoden des Lasers (LS) derart, daß der Laser durch Modenkopplung eine periodische Folge von Emissionsimpulsen (LEP) erzeugt.

13. Wellenleiterstruktur nach Anspruch 11, dadurch gekennzeichnet, daß das andere optische bauelement ein dem Laser (LS) direkt überlagerter steuerbarer, akusto-optischer Modulator ist zur Güteschaltung des Laserresonators durch Modenkonversion, so daß der Laser (LS) gesteuerte kurze Laserimpulse (LEP) emittiert.

14. Wellenleiterstruktur nach Anspruch 11, dadurch gekennzeichnet, daß das andere optische Bauelement aus einem mit zwischengeschalteten Polarisatoren (PS, PS1) versehenen steuerbaren, zweistufigen akusto-optischen Modenwandler (MODA) besteht und direkt mit dem Laser (LS) überlagert ist, wobei der Modenwandler ein Wellenlängenfilter mit gesteuerter Charakteristik zum kontinuierlichen Steuern der Laserfrequenzemissionsspektrums (LE) bildet.

15. Wellenleiterstruktur nach den Ansprüchen 4 und 8, dadurch gekennzeichnet, daß die optischen integrierten Bauelemente eines Heterodyn-Interferometers auf dem Lithiumniobatkristallsubstrat (K) angeordnet und optisch mit dem Laser (LS) als Lichtquelle und mit dem Wanderwellenverstärker (WV) als Dämpfungskompensations-Bauelement gekoppelt sind, wobei wenigstens eine Pumplichtwellenquelle (PE, PE1) optisch mit dem Laser und dem Verstärker verbunden ist.

16. Verfahren zur Herstellung einer Wellenleiterstruktur nach Anspruch 1 mit folgenden Schritten:
   a) Dotieren eines Bereichs (SE) eines Lithiumniobatkristallsubstrats (K) mit Erbium bis is eine vorbestimmte Tiefe (TS) unter einer Kristalloberfläche (S) und
   b) Ausbilden eines Lichtleiterkanals (LK) etwa koaxial mit dem mit Erbium dotierten Bereich (SE), wobei das Dotieren mit Erbium folgende Schritte umfaßt:
   a1) Anbringen einer Erbium- oder Erbiumoxidschicht (SS) auf der Kristalloberfläche (S) und darauf
   a2) ein erstes Tempern (I) bei einer Temperatur oberhalb 1000°C in einer Ar/O$_2$-Atmosphäre, so daß eine tiefenorientierte Erbiumdiffusion stattfindet, gekennzeichnet durch,
   a3) Beschichten der Kristalloberfläche (S) mit einem Sol-Gel (SG),
   a4) ein zweites Tempern (II) zum Ausdiffundieren einer Erbiumdotierung in der Nähe der lithiumniobatsubstratoberfläche in die Sol-Gel-Schicht, so daß eine niedrigere Erbiumkonzentration (CS) an der Oberfläche (S) des Kristalls gebildet wird als am Zentrum (Z) des Lichtleiterkanals (LZ), so daß ein Dotierungszentrum (Z) maximaler Erbiumkonzentration unterhalb der Kristalloberfläche entsteht, und
   a5) Wegätzen des Sol-Gels (SG).

17. Verfahren nach Anspruch 16, dadurch gekennzeichnet, daß
   auf die Kristalloberfläche (S) eine Photoresistschicht (PR) aufgebracht wird, so daß oberhalb des vorgesehenen, mit Erbium dotierten Bereichs (SE) ein photoresistfreier Streifen gebildet wird,
   durch Hochvakuum-Aufdampfen oder Aufstäuben eine Erbium- oder Erbiumoxidschicht (SS) aufgebracht wird, und
   die Photoresistschicht (PR) und die Erbiumschicht (SS) in einem Lift-Off-Verfahren abgelöst werden, so daß ein Erbiumschichtstreifen oder ein Erbiumoxidschictstreifen (SS1) gebildet wird, wonach mittels des ersten und zweiten Temperschritts (I, II) Erbium in das Kristall eindiffundiert wird.

18. Verfahren nach Anspruch 17 dadurch gekennzeichnet, daß der Erbium- oder Erbiumoxidschichtstreifen (SS1) schmaler ist als der vorgesehene Lichtleiterkanal (LK).

**19.** Verfahren nach Anspruch 16, dadurch gekennzeichnet, daß

die Erbium- oder Erbiumoxidschicht (SS) über einen großen Bereich der Kristalloberfläche (S) aufgebracht wird,

der erste und der zweite Temperschritt (I, II) durchgeführt werden,

eine Lichtleitschicht über dem großen Bereich aufgebracht wird,

über dem vorgesehenen Bereich (SE) und Lichtleiterkanal (LK) ein Photoresiststreifen (PR1) gebildet wird,

auf der nicht vom Photoresiststreifen (PR1) abgedeckten Kristalloberfläche (S) eine Ionenstrahlätzung wenigstens bis zur erreichten Erbiumdiffusionstiefe (TS) und Lichtleiterkanaltiefe durchgeführt wird und

der Photoresiststreifen entfernt wird, so daß im Kristall (K) eine schmale Wellenleiterstruktur gebildet wird.

**20.** Verfahren nach Anspruch 16, dadurch gekennzeichnet, daß der Lichtleiterkanal (LK) in dem mit Erbium dotierten Bereich (SE) durch Titandiffusion gebildet wird.

**21.** Verfahren nach Anspruch 20, dadurch gekennzeichnet, daß der Lichtleiterkanal (LK) während 10 h bei einer Temperatur von 1050°C in einer Ar/$O_2$-Atmosphäre aus einer etwa 95 nm dicken photolithographisch strukturierten Titanschicht gebildet wird.

**22.** Verfahren nach Anspruch 16, dadurch gekennzeichnet, daß der Lichtleiterkanal (LK) durch Protonenaustausch (PA) gebildet wird.

**23.** Verfahren nach Anspruch 22, dadurch gekennzeichnet, daß der Lichtleiterkanal (LK) durch einen Lithium-Wasserstoff-Austausch durch eine metallische Maske bei etwa 200°C in einer 1-mol-prozent-lithiumbenzoatgepufferten Benzoesäureschmelze während etwa 2 h und anschließender Temperung bei 350°C während 3-4 h gebildet wird.

## Claims

**1.** Waveguide structure having a region with diffused erbium doping in a light-guide channel (LK) which is arranged in a lithium niobate crystal (K), characterized in that the region (SE) with diffused erbium doping

i) is arranged approximately coaxially with the light-guide channel (LK),

ii) is laterally bounded,

iii) has a doping width (W) and a doping depth (TS) which are smaller than the width and depth of the light-guide channel (LK), respectively, and

iv) has a lower erbium concentration (CS) at the surface (S) of the crystal than in the centre (Z) of the light-guide channel (LZ), so that a doping centre (Z) of maximum erbium concentration is arranged below the crystal surface.

**2.** Waveguide structure according to Claim 1, characterized in that the light-guide channel (LK) consists of a channel with diffused titanium doping.

**3.** Waveguide structure according to Claim 1, characterized in that the light-guide channel (LK) consists of a lithium-ion/proton-exchanged waveguide, in which light is guided in only one polarization.

**4.** Waveguide structure according to one of Claims 1 to 3, characterized in that the light-guide channel (LK) forms an optical travelling-wave amplifier (WV) with the optically active erbium-doped region (SE) which is provided on one side with a light-wave input (EL) and a pumping light-wave input (PE) and, on the other side, with a light-wave output (AL), an input light-wave to be amplified being applied to the input and an amplified output light-wave emerging at the output, an integrated wavelength-selective mirror (DM) which reflects the pumping light into the optically active region, so that the pumping-wave absorption is improved and the input light-wave thus undergoes improved amplification, being arranged at the output.

**5.** Waveguide structure according to Claim 4, characterized in that a wavelength-selective integrated optical coupler (OW) is arranged in the lithium niobate crystal (K) and optically connected to the light-guide channel (LK), so that the pumping light-wave is directly coupled into the active region (SE).

6. Waveguide structure according to Claims 4 and 5, characterized in that an integrated optical wavelength filter (WF) with controlled filter characteristic is arranged in the light-guide channel (LK), so that controlled wavelength-selective amplification of the input light-wave (EL) is produced.

7. Waveguide structure according to Claims 4 and 5, characterized in that the optical travelling-wave amplifier (WV) is optically coupled in series to a lossy integrated optical component (VB) arranged on the lithium niobate crystal substrate (K), the optical travelling-wave amplifier (WV) being controlled by a metered pumping light-wave in such a way that the amplifier works with the lossless optical component (VB) as a 0-dB arrangement.

8. Waveguide structure according to Claims 1 to 3, characterized in that the light-guide channel (LK) forms a laser (LS) which consists of the optically active, erbium-doped region (SE) which is provided with reflectors (DM; RM; MM) at both ends, the reflectors consisting of a dielectric mirror (DM), a metallic mirror (MM) or a surface-relief grating (RM), one reflector being connected to a pumping-wave input (PE) and the other reflector allowing the laser emission wave (LEP) to emerge.

9. Waveguide structure according to Claim 8, characterized in that the laser (LS) is optically coupled to at least one other integrated optical component which can influence the emitted optical field or resonant optical field in the laser, the other component being arranged on the lithium niobate crystal substrate (K) outside the laser (LS) or spatially superimposed with the latter.

10. Waveguide structure according to Claim 8, characterized in that the laser (LS) is coupled to at least one other integrated optical component which is arranged on the lithium niobate crystal substrate (K) and has an active region which overlaps with the active region of the laser.

11. Waveguide structure according to Claim 9 or 10, characterized in that the other component consists of a controllable electro-optical, an acousto-optical or a nonlinear optical transducer which can be controlled by the phase, amplitude and frequency of the laser emission (LEP, LE).

12. Waveguide structure according to Claim 11, characterized in that the other optical component consists of an electro-optical phase modulator which is directly superimposed on the active region of the laser (LS) for modulating the wave field phase of the laser synchronously with the difference frequency of adjacent, axial, transversely monomode eigenmodes of the laser (LS) in such a way that the laser produces a periodic sequence of emission pulses (LEP) by mode coupling.

13. Waveguide structure according to Claim 11, characterized in that the other optical component is a controllable acousto-optical modulator directly superimposed on the laser (LS) for Q-switching of the laser resonator by mode conversion, so that the laser (LS) emits controlled short laser pulses (LEP).

14. Waveguide structure according to Claim 11, characterized in that the other optical component consists of a controllable two-stage acousto-optical mode converter (MODA) provided with interposed polarizers (PS, PS1) and directly superimposed on the laser (LS), the mode converter forming a wavelength filter with controlled characteristic for continuous control of the laser frequency emission spectrum (LE).

15. Waveguide structure according to Claims 4 and 8, characterized in that the optical integrated components of a heterodyne interferometer are arranged on the lithium niobate crystal substrate (K) and are optically coupled to the laser (LS) as light source and to the travelling-wave amplifier (WV) as attenuation-compensation component, at least one pumping light-wave source (PE, PE1) being optically connected to the laser and to the amplifier.

16. Process for producing a waveguide structure according to Claim 1, having the following steps:
    a) doping a region (SE) of a lithium niobate crystal substrate (K) with erbium to a predetermined depth (TS) below a crystal surface (S), and
    b) forming a light-guide channel (LK) approximately coaxially with the erbium-doped region (SE), the erbium doping comprising the following steps:
    a1) applying an erbium or erbium oxide layer (SS) on the crystal surface (S) and, thereafter,
    a2) a first annealing (I) at a temperature above 1000°C in an $Ar/O_2$ atmosphere, so that depth-oriented erbium diffusion takes place,

characterized by

a3) coating of the crystal surface (S) with a sol/gel (SG),

a4) a second annealing (II) for diffusing erbium doping in the vicinity of the lithium niobate substrate surface into the sol/gel layer, so that a lower erbium concentration (CS) is formed on the surface (S) of the crystal than at the centre (Z) of the light-guide channel (LZ), in order that a doping centre (Z) of maximum erbium concentration results below the crystal surface, and

a5) wet etching of the sol/gel (SG).

**17.** Process according to Claim 16, characterized in that a photoresist layer (PR) is applied onto the crystal surface (S) so that a photoresist-free strip is formed above the intended erbium-doped region (SE),

an erbium or erbium oxide layer (SS) is applied by high-vacuum evaporation or sputtering, and

the photoresist layer (PR) and the erbium layer (SS) are removed in a lift-off process, so that an erbium layer strip or an erbium oxide layer strip (SS1) is formed, after which erbium is diffused into the crystal by means of the first and second annealing steps (I, II).

**18.** Process according to Claim 17, characterized in that the erbium or erbium oxide layer strip (SS1) is narrower than the intended light-guide channel (LK).

**19.** Process according to Claim 16, characterized in that

the erbium or erbium oxide layer (SS) is applied over a large region of the crystal surface (S),

the first and second annealing steps (I, II) are carried out,

a light-guide layer is applied over the large region,

a photoresist strip (PR1) is formed over the intended region (SE) and light-guide channel (LK),

ion beam etching is carried out on the crystal surface (S) not covered by the photoresist strip (PR1), at least as far as the erbium diffusion depth (TS) and light-guide channel depth reached, and

the photoresist strip is removed, so that a narrow waveguide structure is formed in the crystal (K).

**20.** Process according to Claim 16, characterized in that the light-guide channel (LK) is formed in the erbium-doped region (SE) by titanium diffusion.

**21.** Process according to Claim 20, characterized in that the light-guide channel (LK) is formed for 10 h at a temperature of 1050°C in an Ar/O$_2$ atmosphere from a 95 nm thick photolithographically structured titanium layer.

**22.** Process according to Claim 16, characterized in that the light-guide channel (LK) is formed by proton exchange (PA).

**23.** Process according to Claim 22, characterized in that the light-guide channel (LK) is formed by lithium/hydrogen exchange through a metallic mask at approximately 200°C in a 1 mol per cent lithium benzoate buffered benzoic acid melt for approximately 2 h and subsequent annealing at 350°C for 3-4 h.

## Revendications

**1.** Structure guide d'ondes comportant une zone dopée à l'erbium réalisée par diffusion dans un canal (LK) guide de lumière aménagé dans un cristal (K) de niobate de lithium, caractérisée par le fait que la zone (SE) pourvu d'un dopage par diffusion à l'erbium

i) est disposée de manière sensiblement coaxiale avec le canal (LK) guide de lumière,

ii) est limitée latéralement

iii) présente une largeur (W) et une profondeur (TS) de dopage qui sont inférieures à la largeur ou à la profondeur du canal (LK) guide de lumière et

iv) présente une concentration (CS) en erbium plus faible à la surface (S) du cristal qu'au centre (Z) du canal guide de lumière (LK), de telle sorte qu'un centre (Z) de dopage avec une concentration maximale en erbium est disposé en-dessous de la surface du cristal.

**2.** Structure guide d'ondes selon la revendication 1, caractérisée par le fait que le canal (LK) guide de lumière est constitué par un canal à dopage de titane réalisé par diffusion.

3. Structure guide d'ondes selon la revendication 1, caractérisée par le fait que le canal (LK) guide de lumière est constitué par un guide de lumière réalisé par échange d'ions/protons de lithium et à l'intérieur duquel la lumière est acheminée avec une polarisation unique.

4. Structure guide d'ondes selon l'une des revendications 1 à 3, caractérisée par le fait que le canal (LK) guide de lumière forme un amplificateur optique à ondes progressives (WV) avec la zone (SE) optiquement active dopée à l'erbium, lequel amplificateur est pourvu d'un côté d'une entrée (EL) d'ondes lumineuses et d'une entrée (PE) d'ondes lumineuses de pompage et de l'autre d'une sortie (AL) d'ondes lumineuses, une onde lumineuse entrante à amplifier étant appliquée à l'entrée et une onde lumineuse sortante amplifiée étant disponible à la sortie, un miroir (DM) intégré sélectif en longueur d'onde étant disposé à la sortie, lequel miroir réfléchit la lumière de pompage dans la zone optiquement active de manière telle que l'absorption des ondes de pompage soit améliorée et qu'ainsi l'onde lumineuse entrante subisse une meilleure amplification.

5. Structure guide d'ondes selon la revendication 4, caractérisée par le fait qu'un coupleur optique (OW) intégré sélectif en longueur d'ondes est disposé dans le cristal (K) de niobate de lithium et est couplé optiquement au canal (LK) guide de lumière de manière telle que l'onde lumineuse de pompage soit couplée directement dans la zone (SE) active.

6. Structure guide d'ondes selon les revendications 4 et 5, caractérisée par le fait qu'un filtre optique de longueur d'ondes (WF) intégré à caractéristique commandée est disposé dans le canal (LK) guide de lumière de manière à produire une amplification contrôlée sélective en longueur d'onde de l'onde lumineuse entrante (EL).

7. Structure guide d'ondes selon les revendications 4 et 5, caractérisée par le fait que l'amplificateur (WV) optique à ondes progressives est couplé optiquement en série avec un élément (VB) optique intégré présentant des pertes placé sur le cristal substrat (K) de niobate de lithium, l'amplificateur (WV) optique à ondes progressives étant commandé par une onde lumineuse dosée de pompage de manière telle que l'amplificateur travaille en tant que dispositif O dB avec l'élément optique (VB) à pertes.

8. Structure guide d'ondes selon les revendications 1 à 3, caractérisée par le fait que le canal (LK) guide de lumière forme un laser (LS) qui se compose de la zone (SE) active optiquement, dopée à l'erbium, pourvue de réflecteurs (DM; RM, MM) à ses deux extrémités, les réflecteurs étant composés d'un miroir (DM) diélectrique, d'un miroir (MM) métallique ou d'un réseau (RM) superficiel en relief, un réflecteur étant relié à une entrée de pompage (PE) et l'autre réflecteur laissant passer l'onde (LEP) émise par le laser.

9. Structure guide d'ondes selon la revendication 8, caractérisée par le fait que le laser (LS) est couplé optiquement avec au moins un autre élément optique intégré qui est susceptible d'agir sur le champ optique émis ou sur le champ optique résonnant dans le laser, l'autre élément étant disposé sur le cristal substrat (K) en niobate de lithium à l'extérieur du laser (LS) ou au-dessus de celui-ci dans l'espace.

10. Structure guide d'ondes selon la revendication 8, caractérisée par le fait que le laser (LS) est couplé optiquement avec au moins un autre élément optique intégré qui est disposé sur le cristal substrat (K) en niobate de lithium et présente une zone active qui recouvre la zone active du laser.

11. Structure guide d'ondes selon la revendication 9 ou la revendication 10, caractérisée par le fait que l'autre élément est constitué par un convertisseur électro-optique commandé, un convertisseur acousto-optique commandé ou un convertisseur optique non linéaire grâce auquel on peut commander la phase, l'amplitude et la fréquence de l'émission laser (LEP, LE).

12. Structure guide d'ondes selon la revendication 11, caractérisée par le fait que l'autre élément optique est constitué par un modulateur de phase électro-optique qui est placé directement au-dessus de la zone active du laser (LS) aux fins de moduler la phase de la plage de fréquences du laser en synchronisme avec la fréquence différentielle de modes propres axiaux voisins du laser, monomodes transversalement, de manière telle que le laser produise par couplage de modes une séquence périodique d'impulsions d'émission (LEP).

13. Structure guide d'ondes selon la revendication 11, caractérisée par le fait que l'autre élément optique est un modulateur acousto-optique commandé qui est placé directement au-dessus du laser (LS) aux fins de commuter le résonateur à laser par conversion de mode, de telle sorte que le laser (LS) émette de courtes impulsions (LEP) commandées.

**14.** Structure guide d'ondes selon la revendication 11, caractérisée par le fait que l'autre élément optique est constitué par un convertisseur de mode (MODA) acousto-optique commandé à deux étages, avec des polarisateurs (PS, PS1) intermédiaires et est placé directement au-dessus du laser (LS), le convertisseur de mode formant un filtre de longueur d'ondes à caractéristique commandée pour commander en continu le spectre de fréquences d'émission du laser.

**15.** Structure guide d'ondes selon les revendications 4 et 8, caractérisée par le fait que les éléments optiques intégrés d'un interféromètre hétérodyne sont disposés sur le cristal substrat (K) en niobate de lithium et sont couplés optiquement avec le laser (LS) en tant que source de lumière et avec l'amplificateur à ondes progressives (WV) en tant qu'élément compensateur d'affaiblissement, au moins une source lumineuse de pompage (PE, PE1) étant connectée optiquement au laser et à l'amplificateur.

**16.** Procédé de fabrication d'une structure guide d'ondes selon la revendication 1, comprenant les étapes suivantes:

a) dopage à l'erbium d'une zone (SE) d'un cristal substrat (K) en niobate de lithium sur une profondeur (TS) prédéterminée en-dessous d'une surface (S) de cristal et

b) formation d'un canal (LK) guide de lumière sensiblement coaxial avec la zone (SE) dopée à l'erbium, le dopage à l'erbium comprenant les étapes suivantes:

a1) application d'une couche d'erbium ou d'une couche d'oxyde d'erbium (SS) sur la surface du cristal (S), puis

a2) une première recuisson (I) à une température supérieure à 1000 °C sous une atmosphère Ar/O$_2$ de manière à obtenir une diffusion de l'erbium dans la direction de la profondeur, caractérisé par

a3) le revêtement de la surface du cristal (S) au moyen d'un sol-gel (SG),

a4) une deuxième recuisson (II) aux fins de diffuser un dopage à l'erbium dans la couche de sol-gel dans le voisinage de la surface du substrat en niobate de lithium, de manière à obtenir une plus faible concentration en erbium (CS) à la surface (S) du cristal qu'au centre (Z) du canal (LK) guide de lumière, de telle sorte que l'on a un centre de dopage (Z) avec une concentration maximale en erbium en-dessous de la surface du cristal, et

a5) élimination du sol-gel (SG) par attaque chimique.

**17.** Procédé selon la revendication 16, caractérisé par le fait que l'on applique sur la surface (S) du cristal une couche de photorésist (PR) de manière à former au-dessus de la zone (SE) devant être dopée à l'erbium une bande exempte de photorésist, que l'on applique par métallisation sous vide poussé ou par pulvérisation une couche d'erbium ou une couche d'oxyde d'erbium (SS) et on élimine la couche de photorésist (PR) et la couche d'erbium (SS) par un procédé de décollement de manière à former une bande (SS1) avec une couche d'erbium ou une couche d'oxyde d'erbium, après quoi on fait diffuser l'erbium dans le cristal au moyen des première et deuxième étapes de recuisson (I, II).

**18.** Procédé selon la revendication 17, caractérisé par le fait que la bande (SS1) de couche d'erbium ou de couche d'oxyde d'erbium est plus étroite que le canal (LK) guide de lumière prévu.

**19.** Procédé selon la revendication 16, caractérisé par le fait que l'on applique la couche (SS) d'erbium ou d'oxyde d'erbium sur une zone importante de la surface (S) du cristal, on réalise la première et la deuxième étape de recuisson (I, II), on applique une couche guide de lumière sur la zone importante, on forme sur la zone (SE) prévue et le canal (LK) guide de lumière une bande de photorésist (PR1), sur la surface (S) du cristal non recouverte par la bande de photorésist (PR1) on procède à une attaque par rayons ionisants au moins jusqu'à la profondeur (TS) de diffusion de l'erbium atteinte et jusqu'à la profondeur du canal guide de lumière et on élimine la bande de photorésist, de telle sorte qu'une structure étroite de guide d'ondes est formée dans le cristal (K).

**20.** Procédé selon la revendication 16, caractérisé par le fait que le canal (LK) guide de lumière dans la zone (SE) dopée à l'erbium est formé par diffusion de titane.

**21.** Procédé selon la revendication 20, caractérisé par le fait que la canal (LK) guide de lumière est formé en 10 h à une température de 1050 °C sous une atmosphère Ar/O$_2$ à partir d'une couche de titane d'environ 95 nm d'épaisseur structurée par voie photolithographique.

**22.** Procédé selon la revendication 16, caractérisé par le fait que le canal (LK) guide de lumière est formé par échange de protons (PA).

**23.** Procédé selon la revendication 22, caractérisé par le fait que le canal (LK) guide de lumière est formé par un échange lithium-hydrogène à travers un masque métallique à 200 °C environ dans un bain d'acide benzoïque tamponné avec un pourcent en mole de benzoate de lithium, pendant 2 h environ, suivi d'un recuit à 350°C pendant 3-4 h.

*Fig. 1*

*Fig. 2*

*Fig. 3*

Fig. 4

Fig. 5

I: 1000°C, Ar, O₂

III: 1050°C, Ar, O₂

Fig. 6

16

Fig. 7

Fig. 8